# EUROPEAN PATENT APPLICATION

(11) **EP 2 278 684 A2**
(43) Date of publication of application: **26.01.2011**
(21) Application number: 10007326.1
(22) Date of filing: 15.07.2010
(51) Int. Cl.: H02J 7/02

(54) **Contactless power supplying communications apparatus, contactless power receiving communication apparatus, power supplying communication controlling method and power receiving communication controlling method**

(30) Priority: 23.07.2009 JP 2009171799
(71) Applicant: Sony Corporation, Tokyo 108-0075 (JP)
(72) Inventor: Kozakai, Osamu, Tokyo 108-0075 (JP)
(74) Representative: Müller - Hoffmann & Partner

(57) **Abstract**

A contactless power supplying communication apparatus includes: a resonance element (13) adapted to supply alternating current power to one or more electronic apparatus (2) by resonance; an alternating current power supply section (11) adapted to generate alternating current power of a frequency in accordance with a resonance frequency of the resonance element (13) and supply the generated alternating current power to the resonance element (13); a communication section (14) adapted to carry out a communication process through the resonance element (13); and a switching section (15b) provided between the resonance element (13) and the communication section (14) and adapted to cut off connection between the resonance element (13) and the communication section (14) upon power supply but establish connection between the resonance element (13) and the communication section (14) upon communication.

## Description

### BACKGROUND OF THE INVENTION

### 1. Field of the Invention

This invention relates to an apparatus which has a function of supplying electric power and another function of carrying out communication using a resonance phenomenon such as magnetic field resonance or electric field resonance, an apparatus which has a function of receiving electric power and another function of carrying out communication using a resonance phenomenon similarly and a method of controlling supply or reception of electric power and communication used in the apparatus mentioned.

### 2. Description of the Related Art

As a technique for allowing transmission of electric energy in a contactless fashion, an electromagnetic induction method and a magnetic field resonance method are available. The electromagnetic induction method and the magnetic field resonance method have such various differences as described below, and in recent years, attention is paid to energy transmission which uses the magnetic field resonance method.

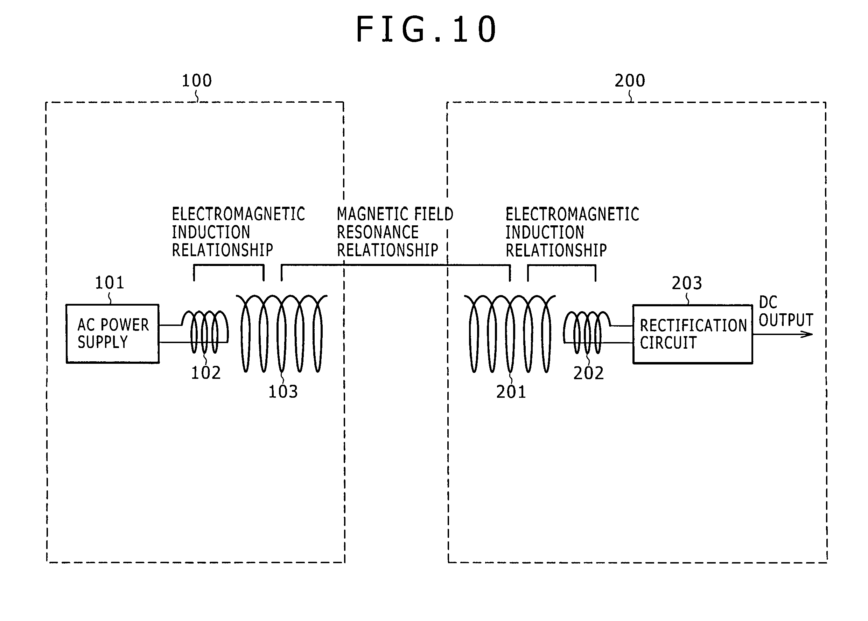

FIG. 10 shows an example of a configuration of a contactless power supply system of the magnetic field resonance type wherein a power supply source and a power supply object or destination correspond in a one-by-one corresponding relationship to each other. Referring to FIG. 10, the contactless power supplying apparatus of the magnetic field resonance type shown includes a power supply source 100 and a power supply destination 200.

The power supply source 100 may be, for example, a charging cradle and includes an AC (alternating current) power supply 101, an excitation element 102, and a resonance element 103. Meanwhile, the power supply destination 200 may be a portable telephone terminal and includes a resonance element 201, an excitation element 202 and a rectification circuit 203.

Each of the excitation element 102 and the resonance element 103 of the power supply source 100 and the resonance element 201 and the excitation element 202 of the power supply destination 200 is formed from an air-core coil. In the inside of the power supply source 100, the excitation element 102 and the resonance element 103 are coupled strongly to each other by electromagnetic induction. Similarly, in the inside of the power supply destination 200, the resonance element 201 and the excitation element 202 are coupled strongly to each other by electromagnetic induction.

When the self resonance frequencies of the resonance element 103 in the form of an air-core coil of the power supply source 100 and the resonance element 201 in the form of an air-core coil of the power supply destination 200 coincide with each other, the resonance element 103 and the resonance element 201 are placed in a magnetic field resonance relationship, in which the coupling amount is maximum and the loss is minimum.

In particular, the contactless power supply system shown in FIG. 10 operates in the following manner. In particular, first in the power supply source 100, AC power of a predetermined frequency which is energy of AC current from the AC power supply 101 is supplied to the excitation element 102, in which AC power to the resonance element 103 is induced by electromagnetic induction by the AC power. Here, the frequency of the AC power generated in the AC power supply 101 is equal to the self-resonance frequencies of the resonance element 103 of the power supply source and the resonance element 201 of the power supply destination.

As described hereinabove, the resonance element 103 of the power supply source 100 and the resonance element 201 of the power supply destination 200 are disposed in a relationship of magnetic field resonance. Therefore, with the resonance frequency, AC power which is energy of AC current or the like is supplied from the resonance element 103 to the resonance element 201 in a contactless fashion.

In the power supply destination 200, the AC power from the resonance element 103 of the power supply source 100 is accepted by the resonance element 201. The AC power from the resonance element 201 is supplied to the rectification circuit 203 through the excitation element 202 by electromagnetic induction and is converted by the rectification circuit 203 into and outputted as DC (direct current) power.

In this manner, AC power is supplied from the power supply source 100 to the power supply destination 200 in a contactless fashion. It is to be noted that the DC power outputted from the rectification circuit 203 is supplied, for example, to a charging circuit to which a battery is connected so that it is used to charge the battery.

The contactless power supply system wherein the power supply source and the power supply destination configured in such a manner as described above with reference to FIG. 10 correspond in a one-by-one corresponding relationship to each other has the following characteristics.

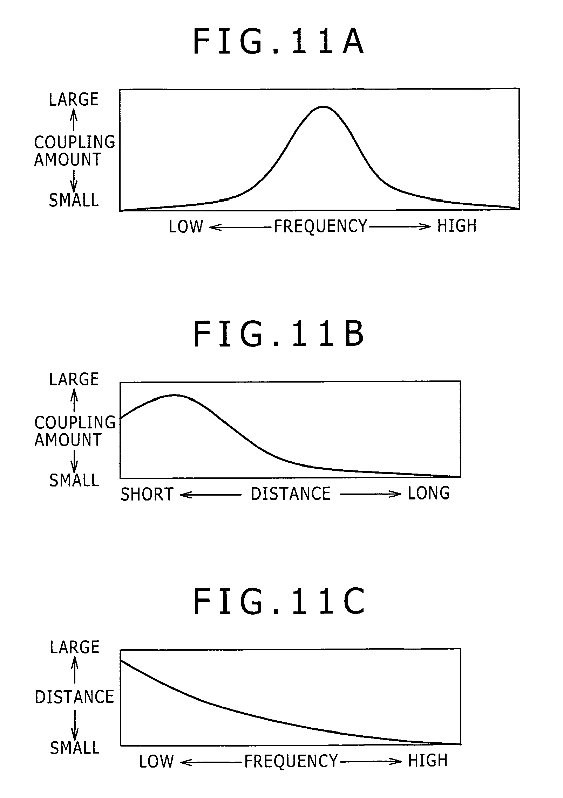

The contactless power supply system has such a relationship between the frequency of the AC power supply and the coupling amount as illustrated in FIG. 11A. As can be recognized from FIG. 11A, even if the frequency of the AC power supply is low or conversely high, the coupling amount is not high but exhibits its maximum amount only at a predetermined frequency with which a magnetic field resonance phenomenon occurs. In other words, the coupling amount exhibits frequency selectivity depending upon the magnetic field resonance.

Further, the contactless power supply system has such a relationship between the distance between the resonance elements 103 and 201 and the coupling amount as illustrated in FIG. 11B. As can be recognized from FIG. 11B, the coupling amount decreases as the distance between the resonance elements increases.

However, even if the distance between the resonance elements is small, the coupling amount is not necessarily great, but at a particular resonance frequency, the coupling amount exhibits a maximum value at a particular distance. Further, it can be recognized from FIG. 11B that a coupling amount higher than a fixed level can be assured if the distance between the resonance elements remains within a certain range.

Further, the contactless power supply system has such a relationship between the resonance frequency and the distance between the resonance elements with which a maximum coupling amount is obtained as illustrated in FIG. 11C. From FIG. 11C, it can be recognized that, where the resonance frequency is low, the distance between the resonance elements is great. Also it can be recognized that, where the resonance frequency is high, a maximum coupling amount is obtained by decreasing the distance between the resonance elements.

In a contactless power supply system of the electromagnetic induction type which is used widely at present, it is necessary for the power supplying source and the power supplying destination to share magnetic fluxes, and in order to send power efficiently, it is necessary for the power supplying source and the power supplying destination to be disposed closely to each other. Also axial registration of the power supplying source and the power supplying destination to be coupled to each other is significant.

Meanwhile, a contactless power supply system which uses a magnetic field resonance phenomenon is advantageous in that, in the contactless power supply system, power can be transmitted over a greater distance than that by the electromagnetic induction method and besides, even if the axial registration is not very good, the transmission efficiency does not drop very much.

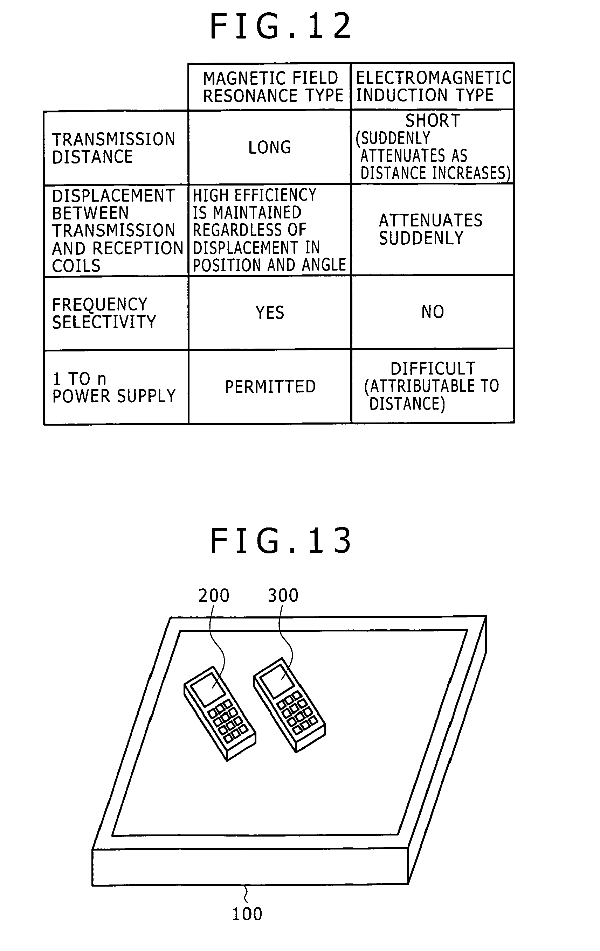

From the foregoing, the contactless power supply system of the magnetic field resonance type and the contactless power supply system of the electromagnetic induction type have such differences as listed in FIG. 12. In particular, as seen in FIG. 12, the contactless power supply system of the magnetic field resonance type is tough against displacement between the transmission and reception coils, that is, between the resonance elements and permits a longer transmission distance.

Therefore, the contactless power supply system of the magnetic field resonance type can carry out power supply in such a manner as seen in FIG. 13. In particular, referring to FIG. 13, a plurality of power supply destinations which are portable terminals in FIG. 13 can be placed on a single power supply source which is a power supply cradle in FIG. 13 so that they are charged by the latter.

Meanwhile, it is known to incorporate a contactless IC card function into a portable telephone terminal so that the portable telephone terminal may have a function of a commuter pass or a function of a prepaid railway ticket issued by a railway company, an electronic money function and so forth.

The portable telephone terminal in this instance has a short-range radio communication function which uses a radio frequency identification (RFID) technique in addition to the telephone communication function. Also a portable telephone terminal in related art is available which receives supply of power in a contactless relationship from a charging cradle in accordance with an electromagnetic induction system to charge a battery.

The portable telephone terminal of the type described requires provision of an antenna for RFID and a coil for receiving supply of power, and this gives rise to a problem that miniaturization of the portable telephone terminal is obstructed or increase of the fabrication cost of the portable telephone terminal is invited.

One of countermeasures for solving such problems as described above is disclosed in Japanese Patent Laid-Open No. 2001-307032 (hereinafter referred to as Patent Document 1) wherein a single coil element is used as an antenna for RFID and also as a coil for receiving supply of power.

### SUMMARY OF THE INVENTION

Incidentally, if it is tried to apply the invention disclosed in Patent Document 1 mentioned hereinabove to a contactless power supplying system which supplies power in accordance with the magnetic field resonance method described hereinabove with reference to FIGS. 10 to 13, then the following problem arises.

Usually, a contactless power supplying system of the magnetic field resonance method uses a non-modulated sine wave of a center frequency f0. Since the non-modulated sine wave is in a non-modulated state, the occupation frequency bandwidth is narrow and ideally is 0 Hz.

Accordingly, also the frequency bandwidth necessary for a coil or antenna for transmitting the non-modulated sine wave may be as narrow as approximately several Hz. However, in order to assure a high transmission efficiency, it is demanded that the loss be low, that is, the value of "Q" be high. It is to be noted here that the value "Q" represents the sharpness of a peak of resonance of a resonance circuit, and if the peak of resonance becomes sharp, then the transmission efficiency of electric power which is energy of AC current or the like can be raised.

Meanwhile, for a signal for use with short-distance radio communication such as RFID, a modulation signal or modulation wave obtained by applying modulation to a sine wave is used for information transmission. Therefore, the signal has a frequency bandwidth corresponding to the frequency of the modulation signal.

The frequency bandwidth in this instance is generally several kHz to several MHz, and as the transmission rate increases, a greater frequency width is required. Accordingly, it is necessary also for the frequency bandwidth necessary for a coil or antenna for transmitting the modulation signal to be approximately several kHz to several MHz. In this instance, it is necessary to lower the Q value of the coil to be used as the antenna to some degree to assure frequency band of a somewhat wide frequency band.

In this manner, even if it is tried simply to use a single coil element as a coil for contactless power supply and an antenna for short-range radio communication, since characteristics, that is, a coil characteristic and an antenna characteristic demanded, are different from each other in accordance with the application of the coil, it is difficult to achieve optimization in characteristic of the coil element to be used for the different applications.

Therefore, it is desirable to provide a contactless power supplying communication apparatus, a contactless power receiving communication apparatus, a power supplying communication method and a power receiving communication method wherein both of a power supply efficiency and a communication performance can be assured even where a single element can be used as an antenna for contactless power supply using a resonance method and an antenna for short-range radio communication.

According to an embodiment of the present invention, there is provided a contactless power supplying communication apparatus including a resonance element adapted to supply AC power to one or more electronic apparatus by resonance, an AC power supply section adapted to generate AC power of a frequency in accordance with a resonance frequency of the resonance element and supply the generated AC power to the resonance element, a communication section adapted to carry out a communication process through the resonance element, and switching means provided between the resonance element and the communication section and adapted to cut off connection between the resonance element and the communication section upon power supply but establish connection between the resonance element and the communication section upon communication.

In the contactless power supplying communication apparatus, the resonance element for power transmission is utilized also as an antenna by the communication section. Then, the switching means between the communication section and the resonance element is switched such that it is off or open upon power supply but is on or closed upon communication.

Consequently, upon power supply, the impedance of the resonance element is kept appropriately to carry out supply of power efficiently, but upon communication, the resonance element is used as an antenna to carry out communication appropriately.

According to another embodiment of the present invention, there is provided a contactless power supplying communication apparatus including a resonance element adapted to supply AC power to one or more electronic apparatus by resonance, an AC power supply section adapted to generate AC power of a frequency in accordance with a resonance frequency of the resonance element and supply the generated AC power to the resonance element, a communication section adapted to carry out a communication process through the resonance element, and switching means provided between the resonance element and the AC power supply section and adapted to establish connection between the resonance element and the AC power supply section upon power supply but cut off connection between the resonance element and the AC power supply section upon communication.

In the contactless power supplying communication apparatus, the resonance element for power transmission is utilized also as an antenna by the communication section. Then, the switching means between the AC power supply section and the resonance element is switched such that it is on or closed upon power supply but is off or open upon communication.

Consequently, upon power supply, the AC power from the AC power supply section is supplied to the resonance element to carry out supply of power from the resonance element, but upon communication, the AC power from the AC power supply section is prevented from being supplied to the resonance element so that communication which is carried out using the resonance element as an antenna can be carried out appropriately.

According to a further embodiment of the present invention, there is provided a contactless power supplying communication apparatus including a resonance element adapted to supply AC power to one or more electronic apparatus by resonance, an AC power supply section adapted to generate AC power of a frequency in accordance with a resonance frequency of the resonance element and supply the generated AC power to the resonance element, a communication section adapted to carry out a communication process through the resonance element, and filter means provided between the resonance element and the communication section and having a frequency band which allows a signal of a frequency band to pass through the filter means, the filter means being adapted to keep the impedance of the resonance element to a predetermined value.

In the contactless power supplying communication apparatus, the resonance element for power transmission is utilized also as an antenna by the communication section. Then, the filter circuit provided between the communication section and the resonance element carries out band limitation of a signal and keeps the impedance of the resonance element to an appropriate value so that it may not become low.

Consequently, upon power supply, the impedance of the resonance element is kept appropriately to carry out supply of power efficiently, but upon communication, the resonance element is used as an antenna to carry out communication appropriately.

According to a still further embodiment of the present invention, there is provided a contactless power supplying communication apparatus including a resonance element adapted to supply AC power to one or more electronic apparatus by resonance, an AC power supply section adapted to generate AC power of a frequency in accordance with a resonance frequency of the resonance element and supply the generated AC power to the resonance element, a communication section adapted to carry out a communication process through the resonance element, and filter means provided between the resonance element and the AC power supply section and having a frequency band which allows the AC power to pass through the filter means, the filter means being adapted to keep the impedance of the resonance element to a predetermined value.

In the contactless power supplying communication apparatus, the resonance element for power transmission is utilized also as an antenna by the communication section. Then, the filter circuit provided between the AC power supply section and the resonance element carries out band limitation of a signal and keeps the impedance of the resonance element to an appropriate value so that it may not have an influence on the communication.

Consequently, upon power supply, the AC power from the AC power supply section is supplied to the resonance element to carry out supply of power from the resonance element, but upon communication, the AC power from the AC power supply section is prevented from having an influence on the communication so that communication which is carried out using the resonance element as an antenna can be carried out appropriately.

It is to be noted that also a contactless power receiving communication apparatus which receives supply of power from and communicates with the contactless power supplying communication apparatus includes a switch circuit or a filter circuit provided in one or both of a communication system and a power system similarly as in the contactless power supplying communication apparatus.

Also in such contactless power receiving communication apparatus, it is possible to keep the impedance of the resonance element to an appropriate value to carry out a communication process and a power receiving process favorably.

Since the antenna can be used appropriately for both of the different applications of the contactless power transmission and the short-range radio communication, both of a power transmission efficiency and a communication performance can be assured. Besides, since the antenna is used commonly, miniaturization of apparatus which are used in a contactless power supplying communication system can be promoted.

### BRIEF DESCRIPTION OF THE DRAWINGS

FIG. 1 is a diagrammatic view showing an example of a configuration of a contactless power supplying communication system of the magnetic field resonance type according to a first embodiment of the present invention;
FIG. 2 is a diagrammatic view showing an example of a configuration of a contactless power supplying communication system of the magnetic field resonance type according to a second embodiment of the present invention;
FIG. 3 is a diagrammatic view showing a first example of a configuration of a power supply source of a contactless power supplying communication system of the magnetic field resonance type according to a third embodiment of the present invention;
FIG. 4 is a diagrammatic view showing a second example of a configuration of the power supply source of the contactless power supplying communication system of the magnetic field resonance type according to the third embodiment of the present invention;
FIG. 5 is a diagrammatic view showing a first example of a configuration of a power supply destination of the contactless power supplying communication system of the magnetic field resonance type according to the third embodiment of the present invention;
FIG. 6 is a diagrammatic view showing a second example of a configuration of the power supply destination of the contactless power supplying communication system of the magnetic field resonance type according to the third embodiment of the present invention;
FIG. 7 is a diagrammatic view showing an example of a configuration of a power supply source of a contactless power supplying communication system of the magnetic field resonance type according to a fourth embodiment of the present invention;
FIG. 8 is a diagrammatic view showing an example of a configuration of a power supply destination of a contactless power supplying communication system of the magnetic field resonance type according to a fourth embodiment of the present invention;
FIG. 9 is a view illustrating an expression for determining a resonance frequency of a resonance element;
FIG. 10 is a diagrammatic view showing an existing contactless power supply system of the magnetic field resonance type;
FIGS. 11A, 11B and 11C are graphs illustrating characteristics of a contactless power supply system of the magnetic field resonance type;
FIG. 12 is a table illustrating results of comparison between a contactless power supply system of the magnetic field resonance type and a contactless power supply system of the electromagnetic induction type; and
FIG. 13 is a schematic view showing a particular example of a contactless power supply system of the magnetic field resonance type.

### DETAILED DESCRIPTION OF THE PREFERRED EMBODIMENTS

In the following, apparatus and methods of embodiments of the present invention are described with reference to the accompanying drawings. Although the present invention can be applied to apparatus and methods of various resonance types such as the magnetic field resonance type, electric field resonance type and electromagnetic induction type, the following description is given taking apparatus and methods of the magnetic field resonance type as examples.

### First Embodiment

### [Contactless Power Supplying Communication System]

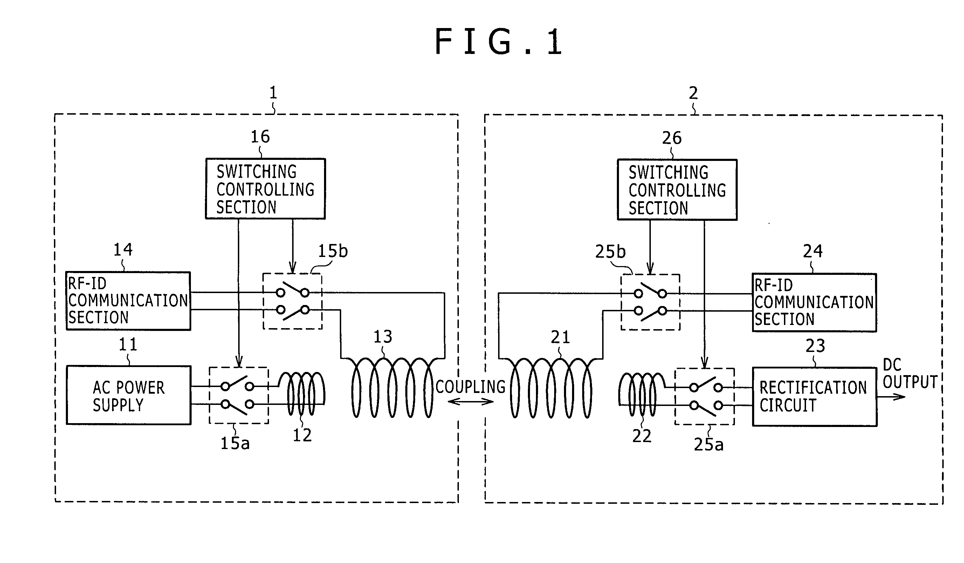

FIG. 1 shows an example of a configuration of a contactless power supplying communication system of the magnetic field resonance type according to the first embodiment of the present invention. Referring to FIG. 1, the contactless power supplying communication system includes a power supply source 1, and a plurality of power supply destinations 2.

The power supply source 1 is a contactless power supplying communication apparatus configured such that it has a function as a charging cradle which can supply electric power contactlessly using a magnetic field resonance method and has a RF-ID communication section to carry out charging and a function as a communication apparatus for carrying out short-range radio communication. The power supply source 1 is a contactless power supplying communication apparatus to which an apparatus of the power supply source and a method according to the embodiment of the present invention are applied.

Further, the power supply source 1 has a mounting table of a size sufficient to allow a plurality of contactless power receiving apparatus, which become power supply destinations such as portable telephone terminals as described hereinabove with reference to FIG. 13, to be placed thereon.

The power supply destination 2 is, for example, a contactless power supplying communication apparatus such as a portable telephone terminal configured such that it has a function of charging a battery by receiving electric power contactlessly from a charging cradle of a magnetic field resonance method, a RF-ID communication section, and a function as a communication apparatus for carrying out short-range radio communication. The power supply destination 2 is a contactless power supplying communication apparatus to which an apparatus of a power supply destination and a method according to the embodiment of the present invention are applied.

As shown in FIG. 1, the power supply source 1 includes an AC power supply 11, an excitation element 12, a resonance element 13, a RF-ID communication section 14, switch circuits 15a and 15b, and a switching controlling section 16. Meanwhile, as shown in FIG. 1, the power supply destination 2 includes a resonance element 21, an excitation element 22, a RF-ID communication section 24, switch circuits 25a and 25b, and a switching controlling section 26.

### [Transmission and Reception of Power]

First, functions of transmitting and receiving electric power in the contactless power supplying communication system of the present embodiment are described.

Each of the excitation element 12 and the resonance element 13 of the power supply source 1 is formed from an air-core coil. Also the resonance element 21 and the excitation element 22 of the power supply destination 2 are each formed from an air-core coil.

The AC power supply 11 of the power supply source 1 generates AC power of a frequency equal to or substantially equal to a self-resonance frequency of the resonance element 13 of the power supply source 1 and the resonance element 21 of the power supply destination 2 and supplies the generated AC power to the excitation element 12.

In particular, in the contactless power supply system of the magnetic resonance type shown in FIG. 1, the resonance element 13 of the power supply source 1 and the resonance element 21 of the power supply destination 2 have an equal or substantially equal resonance frequency.

Further, the AC power supply 11 of the power supply source 1 includes a Kollwitz type oscillation circuit or a Hartley type oscillation circuit in order to generate AC power of an object frequency such as energy of AC current.

The excitation element 12 is excited by AC power from the AC power supply 11 and supplies the AC power to the resonance element 13. The excitation element 12, which receives supply of the AC power from the AC power supply 11, and the resonance element 13 are coupled strongly by electromagnetic induction.

Therefore, AC power from the AC power supply 11 is supplied to the resonance element 13 through the excitation element 12. It is to be noted that, by establishing impedance matching with the AC power supply 11 and the resonance element 13, the excitation element 12 plays a role also of preventing reflection of an electric signal.

The resonance element 13 generates a magnetic field with AC power supplied thereto from the excitation element 12. The resonance element 13 has inductance and capacitance. The resonance element 13 exhibits the highest magnetic field intensity at a resonance frequency thereof. In this manner, the resonance element 13 generates a magnetic field as energy.

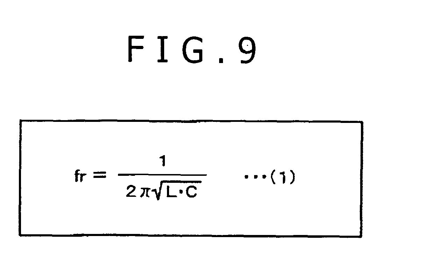

FIG. 9 shows an expression for determining a resonance frequency fr of the resonance element 13. In the expression (1) shown in FIG. 9, the character L represents the inductance which the resonance element 13 has, and the character C represents the capacitance which the resonance element 13 has.

Accordingly, the resonance frequency of the resonance element 13 depends upon the inductance L and the capacitance C which the resonance element 13 has. Since the resonance element 13 is formed from an air-core coil as described hereinabove, the line-to-line capacitance of the resonance element 13 plays a role as the capacitance. The resonance element 13 generates a magnetic field in an axial direction of the coil.

The resonance element 21 of the power supply destination 2 receives supply of AC power from the power supply source 1 by magnetic field coupling by magnetic field resonance. The resonance element 21 of the power supply destination 2 has inductance L and capacitance C similarly to the resonance element 13 of the power supply source described hereinabove in connection with the expression (1) of FIG. 9 and has a resonance frequency equal to or substantially equal to that of the resonance element 13 of the power supply source.

Since the resonance element 21 of the power supply destination 2 has a configuration of an air-core coil as described hereinabove, the line-to-line capacitance plays a role as the capacitance. The resonance element 21 of the power supply destination 2 is connected to the resonance element 13 of the power supply source 1 by magnetic field resonance as shown in FIG. 1.

Consequently, AC power, that is, energy such as AC current, is supplied contactlessly by magnetic field resonance from the resonance element 13 of the power supply source 1 to the resonance element 21 of the power supply destination 2 at the resonance frequency.

Further, as described hereinabove, in the power supply destination 2, the resonance element 21 and the excitation element 22 are coupled to each other by electromagnetic induction, and AC power is supplied from the resonance element 21 to the rectification circuit 23 through the excitation element 22.

It is to be noted that, by establishing impedance matching with the resonance element 21 and the rectification circuit 23, the excitation element 22 plays a role also of preventing reflection of an electric signal.

Though not shown, DC power from the rectification circuit 23 is supplied to a charging circuit to which a battery is connected so that it is used to charge the battery.

In this manner, in the contactless power supplying communication system of the magnetic field resonance type of the present embodiment, the power supply source 1 supplies the AC power to the power supply destination 2 contactlessly. Meanwhile, the power supply destination 2 receives supply of power in a contactless fashion from the power supply source 1 and use the power to charge a battery or for some other application.

### [RF-ID Communication]

Further, in the contactless power supplying communication system of the present embodiment, the power supply source 1 includes a RF-ID communication section 14. The RF-ID communication section 14 is connected to the resonance element 13 and carries out short-range radio communication according to the RFID technique using the resonance element 13 as an antenna.

Similarly, the power supply destination 2 includes a RF-ID communication section 24. The RF-ID communication section 24 is connected to the resonance element 21 and carries out short-range radio communication according to the RFID technique using the resonance element 21 as an antenna.

The short-range radio communication function is used to transmit information from the power supply source 1 to the power supply destination 2 so that the information can be utilized by the power supply destination 2 and transmit information from the power supply destination 2 to the power supply source 1 so that the information can be stored and retained into the power supply source and can be used in various processes.

It is to be noted that, though not shown, the power supply destination 2 can communicate with a different apparatus having a short-range radio communication function according to the RFID technique in addition to the power supply source 1. Consequently, also an electronic money function, a function of a commuter pass issued by a railway station and so forth can be implemented.

### [Selective Use of the Power Transmission/Reception Function and the RF-ID Communication Function]

In this manner, in the contactless power supplying communication system of the present first embodiment, the resonance element 13 in the power supply source 1 implements a function as a coil for power transmission or power supplying and a function as an antenna for communication. In short, the resonance element 13 is used commonly for power transmission and for communication.

Similarly, also in the power supply destination 2, the resonance element 21 implements a function as a coil for power reception and a function as an antenna for communication. In short, the resonance element 21 is used commonly for power reception and for communication.

However, a characteristic demanded for the resonance element 13 is different between power transmission and communication. Similarly, a characteristic demanded for the resonance element 21 is different between power reception and communication.

In particular, in order to achieve a high transmission efficiency in contactless power transmission of the magnetic field resonance method, it is preferable to raise the Q value of the resonance element 13 of the power supply source 1 and the resonance element 21 of the power supply destination 2 as high as possible. However, if the resonance element 13 in the power supply source 1 is connected directly to the AC power supply 11 or the resonance element 21 in the power supply destination 2 is connected directly to the rectification circuit, then the Q value of the resonance element 13 and the resonance element 21 decreases by an influence of the circuit impedance.

In order to prevent this, in the power supply source 1, the excitation element 12 is used to avoid direct connection of the resonance element 13 to the AC power supply 11 to keep the impedance of the resonance element 13 high thereby to keep the Q value of the resonance element 13 high.

Similarly, also in the power supply destination 2, the excitation element 22 is used to avoid direct connection of the resonance element 21 to the rectification circuit 23 to keep the impedance of the resonance element 21 high thereby to keep the Q value of the resonance element 21 high.

On the other hand, in radio communication, an increased frequency band is required as the transmission rate increases. In this instance, if the resonance element 13 or the resonance element 21 having a high Q value is used as an antenna, then a sufficient frequency band cannot be assured, and this distorts the communication waveform, resulting in increase in error in communication.

Therefore, in the power supply source 1 of the contactless power supplying communication system of the present first embodiment, a switching circuit 15a is provided between the AC power supply 11 and the excitation element 12 and another switching circuit 15b is provided between the RF-ID communication section 14 and the resonance element 13.

Each of the switching circuits 15a and 15b is switched by a switching controlling section 16. The switching controlling section 16 switches on the switching circuit 15a and switches off the switching circuit 15b when the power supply source 1 is placed, for example, into a power supplying mode.

In this instance, the switching off of the switching circuit 15b disconnects the connection between the resonance element 13 and the RF-ID communication section 14 to raise the impedance of the resonance element 13 thereby to raise the Q value. By this, the loss of the resonance element 13 can be reduced.

Further, the switching on of the switching circuit 15a allows AC power from the AC power supply 11 to be supplied to the excitation element 12. Consequently, AC power is induced in the resonance element 13 through the excitation element 12, and the power, that is, AC power, can be supplied efficiently to the power supply destination 2.

On the other hand, if the power supply source 1 is placed, for example, into a communication mode, then the switching controlling section 16 switches on the switching circuit 15b and switches off the switching circuit 15a.

In this instance, the switching on of the switching circuit 15b connects the resonance element 13 and the RF-ID communication section 14 to each other to lower the impedance thereby to lower the Q value of the resonance element 13 to an appropriate value. Consequently, a wide frequency band can be assured with the resonance element 13.

Further, the switching off of the switching circuit 15a disconnects the AC power supply 11 and the excitation element 12 from each other. Consequently, a signal from the excitation element 12 is prevented from having an influence on communication to be carried out through the resonance element 13.

Accordingly, in this instance, the RF-ID communication section 14 can use the resonance element 13 as an antenna to carry out short-range radio communication appropriately.

Meanwhile, the power supply destination 2 in the contactless power supplying communication system of the present first embodiment includes a switching circuit 25a provided between the excitation element 22 and the rectification circuit 23 and another switching circuit 25b provided between the resonance element 21 and the RF-ID communication section 24.

Each of the switching circuits 25a and 25b is switched by a switching controlling section 26. When the power supply destination 2 is placed, for example, into a charging mode, the switching controlling section 26 switches on the switching circuit 25a and switches off the switching circuit 25b.

In this instance, the switching off of the switching circuit 25b cuts the connection between the resonance element 21 and the RF-ID communication section 24 to raise the impedance of the resonance element 21 thereby to raise the Q value. By this, the loss of the resonance element 21 can be reduced.

Then, when the switching circuit 25a is switched on, the excitation element 22 and the rectification circuit 23 are connected to each other. Consequently, AC power is induced in the excitation element 22 from the resonance element 21, and the AC power from the power supply source 1 is supplied to the rectification circuit 23 through the resonance element 21 and the excitation element 22.

On the other hand, when the power supply destination 2 is placed, for example, into the communication mode, the switching controlling section 26 switches on the switching circuit 25b and switches off the switching circuit 25a.

In this instance, the switching on of the switching circuit 25b connects the resonance element 21 and the RF-ID communication section 24 to each other to lower the impedance thereby to lower the Q value of the resonance element 21 to an appropriate value. Consequently, a wide frequency band can be assured for the resonance element 21.

Further, the switching off of the switching circuit 25a disconnects the excitation element 22 and the rectification circuit 23 from each other. Consequently, a signal from the excitation element 22 is prevented from having an influence on communication which is carried out through the resonance element 21.

Accordingly, in this instance, the RF-ID communication section 24 can carry out short-range radio communication appropriately using the resonance element 21 as an antenna.

It is to be noted that the mode of the power supply source 1 described above is changed over between the power supply mode and the communication mode, for example, by a user. On the other hand, the mode of the power supply destination 2 is changed over between the charging mode and the communication mode, for example, by a user. However, the manner of the changeover is not limited to them.

For example, if the power supply destination 2 is placed on the power supply source 1 so that it may be charged, then both of the power supply destination 2 and the power supply source 1 may first be placed into the communication mode to transfer necessary information between them, whereafter the power supply source 1 is placed into the power supplying mode and the power supply destination 2 is placed into the charging mode to carry out transfer of power between them.

On the contrary, if the power supply destination 2 is placed on the power supply source 1 so that it may be charged, then the power supply source 1 may be placed into the power supplying mode first while the power supply destination 2 is placed into the charging mode to carry out transfer of power until charging of the power supply destination 2 is completed. Thereafter, both of the power supply source 1 and the power supply destination 2 may be placed into the communication mode to carry out transfer of necessary information between them.

If the power supply source 1 is configured so as to be capable of detecting that the power supply destination 2 is placed thereon and the power supply destination 2 is configured so as to be capable of detecting that it is placed on the power supply source 1 in order to make such transfer of power and information as described above, then the detection may be used as a trigger for the first mode changeover. It is to be noted that it is possible to implement such detection as a configuration of a mechanical switch or detect a magnetic field generated by the resonance element 13 or the resonance element 21.

It is to be noted that, in the power supply source 1 in the contactless power supplying communication system of the present first embodiment described above with reference to FIG. 1, the switching circuit 15b is provided between the RF-ID communication section 14 and the resonance element 13 and the switching circuit 15a is provided also between the AC power supply 11 and the excitation element 12. However, provision of such switching circuits is not limited to this.

For example, the switching circuit 15a is not necessarily required if the AC power supply 11 or the like can keep the impedance appropriate such that a signal from the excitation element 12 or the like may not have an influence on the communication, but only the switching circuit 15b may be provided.

On the contrary, if the impedance of the resonance element 13 can be kept appropriate in the RF-ID communication section 14 and so forth, then the switching circuit 15b is not necessarily required, but only the switching circuit 15a may be provided.

However, where the switching circuits 15a and 15b are provided as shown in FIG. 1, the impedance can be controlled simply and appropriately by both of the power supplying system and the communication system.

It is to be noted that, in the power supply destination 2 in the contactless power supplying communication system of the present first embodiment described above with reference to FIG. 1, the switching circuit 25b is provided between the resonance element 21 and the RF-ID communication section 24 and the switching circuit 25a is provided also between the excitation element 22 and the rectification circuit 23. However, provision of such switching circuits is not limited to this.

For example, the switching circuit 25a is not necessarily required if the rectification circuit 23 or the like can keep the impedance appropriate such that a signal from the excitation element 22 or the like may not have an influence on the communication, but only the switching circuit 25b may be provided.

On the contrary, if the impedance of the resonance element 21 can be kept appropriate in the RF-ID communication section 24 and so forth, then the switching circuit 25b is not necessarily required, but only the switching circuit 25a may be provided.

However, where the switching circuits 25a and 25b are provided as shown in FIG. 1, the impedance can be controlled simply and appropriately by both of the power supplying system and the communication system.

### Second Embodiment

### [Contactless Power Supplying Communication System]

In the contactless power supplying communication system of the first embodiment described above, switching between a predetermined circuit section and a resonance element and switching between a predetermined circuit section and an excitation element are carried out using a switching circuit. However, where the frequency f1 of AC power used for contactless power transmission and the carrier frequency f2 of a communication signal used for short-range radio communication are different from each other, a filter circuit can be used in place of the switching circuit. In this instance, the switch controlling sections for carrying out the switches become unnecessary, and the power supply source and the power supplying destination can be simplified in configuration.

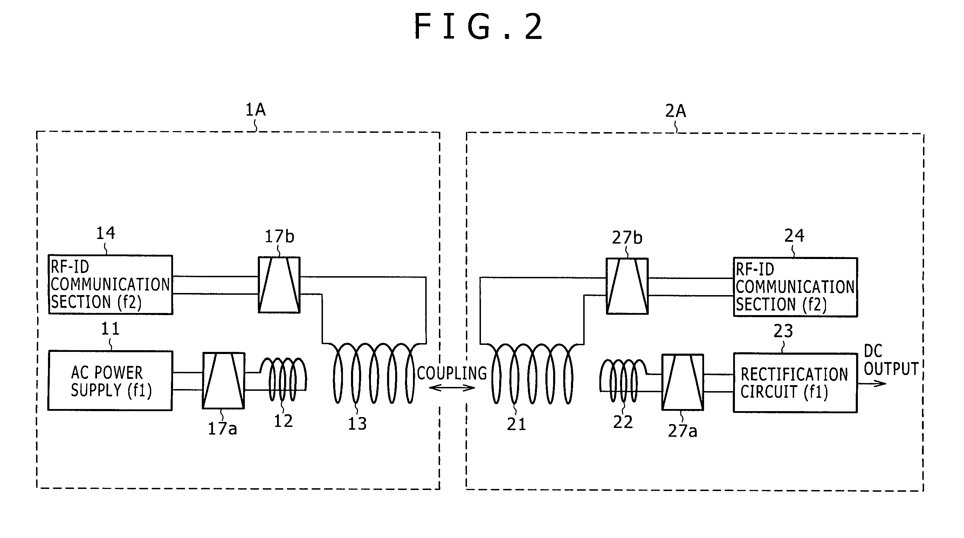

FIG. 2 shows an example of a configuration of a contactless power supplying communication system of a magnetic field resonance system according to a second embodiment of the present invention. Referring to FIG. 2, the contactless power supplying communication system of the present second embodiment includes a power supply source 1A and a plurality of power supply destinations 2A.

The power supply source 1A of the contactless power supplying communication system of the present second embodiment shown in FIG. 2 includes an AC power supply 11, an excitation element 12, a resonance element 13 and a RF-ID communication section 14 similar to those of the contactless power supplying communication system of the second embodiment described hereinabove.

Similarly, each power supply destination 2A of the contactless power supplying communication system of the present second embodiment shown in FIG. 2 includes a resonance element 21, an excitation element 22, a rectification circuit 23 and a RF-ID communication section 24 similar to those of the contactless power supplying communication system of the first embodiment described hereinabove.

As can be recognized from comparison of FIG. 2 with FIG. 1, the power supply source 1A of the contactless power supplying communication system of the present second embodiment includes filter circuits 17a and 17b in place of the switching circuits 15a and 15b provided in the power supply source 1 of the contactless power supplying communication system of the first embodiment.

Further, since the power supply source 1A is configured using the filter circuits 17a and 17b, it does not include the switching controlling section 16.

Further, as can be recognized from comparison of FIG. 2 with FIG. 1, the power supply source 1A of the contactless power supplying communication system of the present second embodiment includes filter circuits 27a and 27b in place of the switching circuits 25a and 25b provided in the power supply source 1 of the contactless power supplying communication system of the first embodiment.

Further, since the power supply source 1A is configured using the filter circuits 27a and 27b, it does not include the switching controlling section 26.

It is assumed here that, in the contactless power supplying communication system of the present second embodiment, the frequency f1 of AC power supply generated by the AC power supply 11 is, for example, 13.56 MHz. Also it is assumed that a communication signal of the frequency f2 of the 2.4 GHz band is transferred between the RF-ID communication section 14 of the power supply source 1A and the RF-ID communication section 24 of the power supply destination 2A.

In this instance, the filter circuit 17b of the power supply source 1A and the filter circuit 27b of the power supply destination 2A have such characteristics as described below at the frequency f1 which is 13.56 MHz. In particular, the filter circuit 17b and the filter circuit 27b are designed such that they have a predetermined frequency characteristic of passing a signal of the 2.4 GHz band therethrough and have a sufficiently high impedance to prevent the Q value of the resonance element 13 and the resonance element 21 from dropping.

Further, the filter circuit 17a of the power supply source 1A and the filter circuit 27a of the power supply destination 2A have such a characteristic as described below at the carrier frequency f2 of the 4 GHz band. In particular, the filter circuit 17a and the filter circuit 27a are designed such that they have a predetermined bandwidth having a center frequency of 13.56 MHz and have an appropriate impedance with which the excitation element 12 and the excitation element 22 do not have an influence on short-range radio communication at the frequency f2. Here, the appropriate impedance depends upon the frequency f2, the structure of the excitation element 12 or the excitation element 22 and so forth.

The essential thing is that the filter circuit 17b of the power supply source 1A and the filter circuit 27b of the power supply destination 2A have frequency characteristics of passing frequency signals of a predetermined band based on the carrier frequency f2 therethrough. Further, the filter circuit 17b of the power supply source 1A and the filter circuit 27b of the power supply destination 2A have such sufficiently high impedances that they do not drop the Q value of the resonance element 13 and the resonance element 21.

Further, the filter circuit 17a of the power supply source 1A and the filter circuit 27a of the power supply destination 2A have frequency characteristics of passing signals of a predetermined frequency such as the frequency f1 therethrough. Further, the filter circuit 17a of the power supply source 1A and the filter circuit 27a of the power supply destination 2A have such appropriate impedances that they do not have an influence on the short-range radio communication.

Consequently, in the contactless power supplying communication system of the present second embodiment, the resonance element 13 in the power supply source 1A can be used for both of power transmission and short-range radio communication without any trouble. Similarly, also the resonance element 21 in the power supply destination 2 can be used for both of power reception and short-range radio communication without any trouble.

Besides, in the contactless power supplying communication system of the present second embodiment shown in FIG. 2, the switching controlling section for switching of the switching circuits which are required in the contactless power supplying communication system of the first embodiment described hereinabove with reference to FIG. 1 is unnecessary. Consequently, the contactless power supplying communication system of the present second embodiment can be simplified in configuration.

It is to be noted that, in the power supply source 1A in the contactless power supplying communication system of the present second embodiment described above with reference to FIG. 2, the filter circuit 17b is provided between the RF-ID communication section 14 and the resonance element 13 and the filter circuit 17a is provided also between the AC power supply 11 and the excitation element 12. However, provision of such switching circuits is not limited to this.

For example, the filter circuit 17a is not necessarily required if the AC power supply 11 or the like can keep the impedance appropriate such that a signal from the excitation element 12 or the like may not have an influence on the communication, but only the filter circuit 17b may be provided.

On the contrary, if the impedance of the resonance element 13 can be kept appropriate in the RF-ID communication section 14 and so forth, then the filter circuit 17b is not necessarily required, but only the filter circuit 17a may be provided.

However, where the filter circuits 17a and 17b are provided as shown in FIG. 2, the impedance can be controlled simply and appropriately by both of the power supplying system and the communication system.

It is to be noted that, in the power supply destination 2A in the contactless power supplying communication system of the second embodiment described above with reference to FIG. 2, the filter circuit 27b is provided between the resonance element 21 and the RF-ID communication section 24 and the filter circuit 27a is provided also between the excitation element 22 and the rectification circuit 23. However, provision of such switching circuits is not limited to this.

For example, the filter circuit 27a is not necessarily required if the rectification circuit 23 or the like can keep the impedance appropriate such that a signal from the excitation element 22 or the like may not have an influence on the communication, but only the filter circuit 27b may be provided.

On the contrary, if the impedance of the resonance element 21 can be kept appropriate in the RF-ID communication section 24 and so forth, then the filter circuit 27b is not necessarily required, but only the filter circuit 27a may be provided.

However, where the switching circuits 27a and 27b are provided as shown in FIG. 2, the impedance can be controlled simply and appropriately by both of the power supplying system and the communication system.

### Third Embodiment

A contactless power supplying communication system according to a third embodiment of the present invention is generally configured such that a communication system for carrying out short-range radio communication and a power supplying system for carrying out supply of power use different limitation means to carry out a limitation process regarding a signal.

### [Example of a Configuration of the Power Supply Source]

First, examples of a configuration of a power supply source of the contactless power supplying communication system of the present third embodiment are described.

### [First Example of the Power Supply Source in the Third Embodiment]

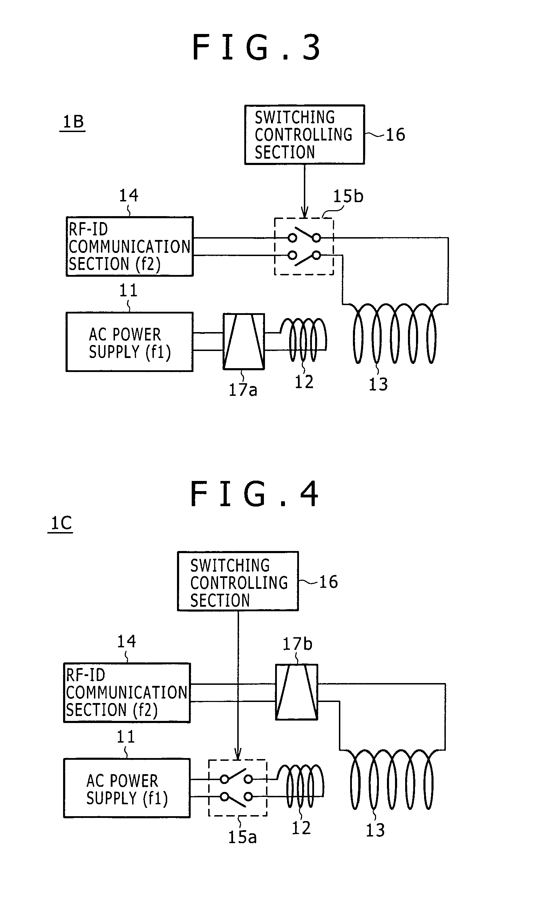

FIG. 3 shows a first example of a configuration of the power supply source of the contactless power supplying communication system of the present third embodiment.

Referring to FIG. 3, the power supply source 1B of the present first example includes a filter circuit 17a between an AC power supply 11 and an excitation element 12 and a switching circuit 15b between a RF-ID communication section 14 and a resonance element 13. The power supply source 1B further includes a switching controlling section 16 for controlling switching of the switching circuit 15b.

In the present example, when the power supply source 1B is placed, for example, into the power supplying mode, the switching controlling section 16 switches off the switching circuit 15b.

In this instance, the switching off of the switching circuit 15b cuts the connection between the resonance element 13 and the RF-ID communication section 14 to raise the impedance of the resonance element 13 thereby to raise the Q value. Consequently, the loss of the resonance element 13 can be reduced.

Meanwhile, AC power from the AC power supply 11 is supplied to the resonance element 13 through the filter circuit 17a. The filter circuit 17a has such a characteristic as described below at the frequency f2 of the 2.4 GHz band used by the RF-ID communication section 14 similarly to the filter circuit 17a in the second embodiment described hereinabove.

In particular, the filter circuit 17a is designed such that it has a predetermined bandwidth having a center frequency of 13.56 MHz and has an appropriate impedance with which the excitation element 12 does not have an influence on short-range radio communication at the carrier frequency f2. Here, the appropriate impedance depends upon the carrier frequency f2, the structure of the excitation element 12 and so forth.

Consequently, also the impedance of the resonance element 13 is kept high, and AC power from the AC power supply 11 can be transmitted efficiently and contactlessly to a power supplying destination by magnetic field resonance through the excitation element 12 and the resonance element 13.

On the other hand, when the power supply source 1B is placed, for example, into the communication mode, the switching controlling section 16 switches on the switching circuit 15b.

In this instance, the resonance element 13 and the RF-ID communication section 14 are connected to each other to lower the impedance of the resonance element 13 thereby to lower the Q value of the resonance element 13 to an appropriate value. Consequently, the resonance element 13 can assure a wide frequency band.

On the other hand, to the excitation element 12, AC power from the AC power supply 11 is supplied through the filter circuit 17a as described hereinabove. Therefore, the function of the filter circuit 17a prevents a signal from the excitation element 12 to which AC power is supplied from having an influence on short-range radio communication which is carried out through the resonance element 13.

Consequently, also the short-range radio communication which the RF-ID communication section 14 carries out using the resonance element 13 as an antenna can be carried out appropriately.

### [Second Example of the Power Supply Source of the Third Embodiment]

FIG. 4 shows a second example of a configuration of the power supply source of the contactless power supplying communication system of the third embodiment.

Referring to FIG. 4, the power supply source 1C of the second example is different from the power supply source 1B of the first example described hereinabove with reference to FIG. 3, a switching circuit 15a is provided between the AC power supply 11 and the excitation element 12 and a filter circuit 17b is provided between the RF-ID communication section 14 and the resonance element 13. Further, a switching controlling section 16 for controlling switching of the switching circuit 15a is provided.

In the present example, the switching controlling section 16 switches on the switching circuit 15a when the power supply source 1C is placed, for example, into the power supplying mode.

In this instance, when the switching circuit 15a is switched on, the AC power from the AC power supply 11 is supplied to the excitation element 12. Consequently, AC power is induced in the resonance element 13 through the excitation element 12, and the power, that is, AC power, can be supplied efficiently to a power supply destination 2.

On the other hand, the RF-ID communication section 14 and the resonance element 13 are connected to each other through the filter circuit 17b. Similarly as in the case of the filter circuit 17b of the power supply source 1B in the second embodiment described above, the filter circuit 17b has such a characteristic as described below at the frequency f1 of 13.56 MHz of the AC power generated by the AC power supply 11.

In particular, the filter circuit 17b is designed such that it has a predetermined frequency characteristic with which it passes a signal of, for example, the 2.4 GHz band from the RF-ID communication section 14 therethrough and has such a sufficiently high impedance that it does not increase the Q value of the resonance element 13.

Consequently, since the Q value of the resonance element 13 can be kept high, the power can be supplied contactlessly to a power supply destination efficiently through the resonance element 13 as described above.

Further, in the present example, the switching controlling section 16 switches off the switching circuit 15a when the power supply source 1C is placed, for example, into a communication mode.

In this instance, since the switching circuit 15a is switched off, the connection between the AC power supply 11 and the excitation element 12 is cut off and no AC current is supplied to the excitation element 12 any more. Therefore, a signal from the excitation element 12 does not have an influence on the short-range radio communication carried out through the resonance element 13.

On the other hand, the RF-ID communication section 14 and the resonance element 13 are connected to each other through the filter circuit 17b. As described above, the filter circuit 17b is designed such that it has a predetermined frequency characteristic with which it passes a signal of, for example, the 2.4 GHz band from the RF-ID communication section 14 therethrough and has such a sufficiently high impedance that it does not decrease the Q value of the resonance element 13.

Consequently, the RF-ID communication section 14 can suitably carry out short-range radio communication using the resonance element 13 as an antenna without being influenced from the excitation element 12.

In this manner, in the case of the third embodiment, if different limitation means, that is, a different switching circuit and a different filter circuit, between a communication system and a power supplying system are used, then supply of power and short-range radio communication can be suitably carried out using the resonance element 13 commonly.

### [Example of the Configuration of the Power Supply Destination]

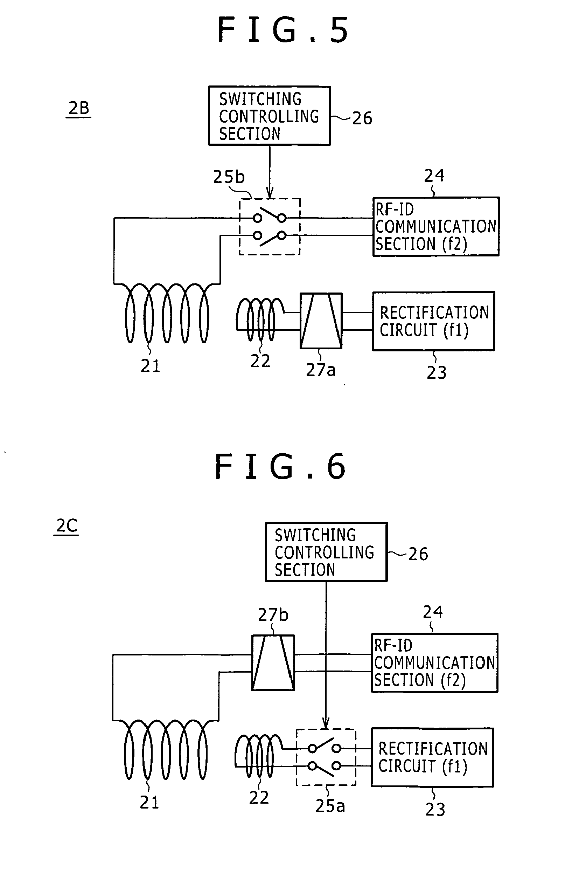

Now, examples of a configuration of a power supply destination in the third embodiment are described. FIGS. 5 and 6 illustrate examples of a configuration of a power supply destination of the contactless power supplying communication system in the third embodiment. It is to be noted that, in FIGS. 5 and 6, the power supply destinations shown include several common components to those of the power supply destinations 2 and 2A shown in FIGS. 1 and 2, and overlapping description of the common components is omitted herein to avoid redundancy.

### [First Example of the Power Supply Destination of the Third Embodiment]

FIG. 5 shows a first example of a configuration of the power supply destination of the contactless power supplying communication system in the third embodiment.

Referring to FIG. 5, the power supply destination 2B of the first example is configured such that a filter circuit 27a is provided between an excitation element 22 and a rectification circuit 23 and a switching circuit 25b is provided between a resonance element 21 and a RF-ID communication section 24. Further, a switching controlling section 26 for controlling switching of the switching circuit 25b is provided.

In the present example, the switching controlling section 26 switches off the switching circuit 25b when the power supply destination 2B is placed, for example, into a power supplying mode.

In this instance, the switching off of the switching circuit 25b cuts the connection between the resonance element 21 and the RF-ID communication section 24 to increase the impedance of the resonance element 21 thereby to increase the Q value. Consequently, the loss of the resonance element 21 can be reduced.

Meanwhile, AC power induced in the resonance element 21 is supplied to the rectification circuit 23 by electromagnetic coupling through the excitation element 22 and the filter circuit 27a. It is to be noted that, similarly to the filter circuit 27a in the second embodiment described above, the filter circuit 27a has such a characteristic as described below at the frequency f2 in the 2.4 GHz band used by the RF-ID communication section 24.

In particular, the filter circuit 27a is designed such that it has a predetermined bandwidth having a center frequency of 13.56 MHz and has an appropriate impedance such that the excitation element 22 does not have an influence on short-range radio communication at the frequency f2. Here, the appropriate impedance is different depending upon the frequency f2, the structure of the excitation element 22 and so forth.

Consequently, AC power from the power supply source 1 is efficiently supplied to the rectification circuit 23 through the resonance element 21, excitation element 22 and filter circuit 17a and is converted into DC power by the rectification circuit 23.

Further, the switching controlling section 26 switches on the switching circuit 25b when the power supply destination 2B is placed, for example, into a communication mode. When the switching circuit 25b is switched on, the resonance element 21 and the RF-ID communication section 24 are connected to each other to decrease the impedance thereby to decrease the Q value of the resonance element 21 to an appropriate value. Consequently, a wide frequency band can be secured for the resonance element 21.

On the other hand, AC power induced by electromagnetic induction in the excitation element 22 as described above is supplied to the rectification circuit 23 through the filter circuit 27a. Therefore, the function of the filter circuit 27a prevents a signal from the excitation element 22 from having an influence on the short-range radio communication carried out through the resonance element 21.

Consequently, also the short-range communication process carried out using the resonance element 21 as an antenna by the RF-ID communication section 24 can be carried out appropriately.

### [Second Example of the Power Supply Destination of the Third Embodiment]

FIG. 6 shows a second example of a configuration of a power supply destination of the contactless power supplying communication system in the third embodiment.

Referring to FIG. 6, different from the power supply destination 2B in the second example shown in FIG. 5, the power supply destination 2C in the second example is configured such that a switching circuit 25a is provided between the excitation element 22 and the rectification circuit 23 and a filter circuit 27b is provided between the resonance element 21 and the RF-ID communication section 24. Further, a switching controlling section 26 for controlling switching of the switching circuit 25a is provided.

In the present example, the switching controlling section 26 switches on the switching circuit 25a when the power supply destination 2C is placed, for example, into a power supplying mode.

In this instance, the resonance element 21 and the RF-ID communication section 24 are connected to each other through the filter circuit 27b. Similarly to the filter circuit 27b of the power supply destination 2B in the second embodiment described above, the filter circuit 27b has such a characteristic as described below at the frequency f1 of 13.56 MHz of the AC power.

In particular, the filter circuit 27b is designed such that it has a predetermined frequency characteristic with which it passes a signal of, for example, the 2.4 GHz band used in the RF-ID communication section 24 therethrough and has such a sufficiently high impedance that it does not decrease the Q value of the resonance element 21.

Thus, when the switching circuit 25a is switched on, AC power from the power supply source is induced in the resonance element 21 of the power supply destination 2C by magnetic field resonance as described above, and the induced AC power is supplied to the rectification circuit 23 by electromagnetic coupling through the excitation element 22. Consequently, the AC power from the power supply source is efficiently supplied to the rectification circuit 23 through the resonance element 21, excitation element 22 and switching circuit 27a and is converted into DC power by the rectification circuit 23.

Since the Q value of the resonance element 21 can be kept high in this manner, power can be supplied contactlessly to a power supply destination efficiently through the resonance element 21 as described above.

Further, in the present example, the switching controlling section 16 switches off the switching circuit 25a when the power supply destination 2C is placed, for example, into a communication mode.

In this instance, the switching off of the switching circuit 25a cuts off the connection between the excitation element 22 and the rectification circuit 23, and consequently, no AC power is supplied to the excitation element 22 any more. Therefore, a signal from the excitation element 22 does not have an influence on the short-range radio communication carried out through the resonance element 21.

On the other hand, the resonance element 21 and the RF-ID communication section 24 are connected to each other through the filter circuit 27b. As described above, the filter circuit 27b is designed such that it has a predetermined frequency characteristic with which it passes a signal of, for example, the 2.4 GHz band used in the RF-ID communication section 24 therethrough and has such a sufficiently high impedance that it does not decrease the Q value of the resonance element 21.

Consequently, the RF-ID communication section 24 can suitably carry out short-range radio communication using the resonance element 21 as an antenna without being influenced from the excitation element 22.

In this manner, in the case of the third embodiment, also where different limitation means, that is, a different switching circuit and a different filter circuit, are used between a communication system and a power supplying system, supply of power and short-range radio communication can be appropriately carried out using the resonance element 21 commonly.

### Fourth Embodiment

A contactless power supplying communication system of the fourth embodiment is configured such that both of a switching circuit and a filter circuit are provided in each of a communication system for carrying out short-range radio communication and a power supplying system for carrying out supply of power.

In particular, the contactless power supplying communication system of the fourth embodiment is configured by integrating the contactless power supplying communication system of the first embodiment described above and the contactless power supplying communication system of the second embodiment described above.

### [Example of the Configuration of the Power Supply Source in the Fourth Embodiment]

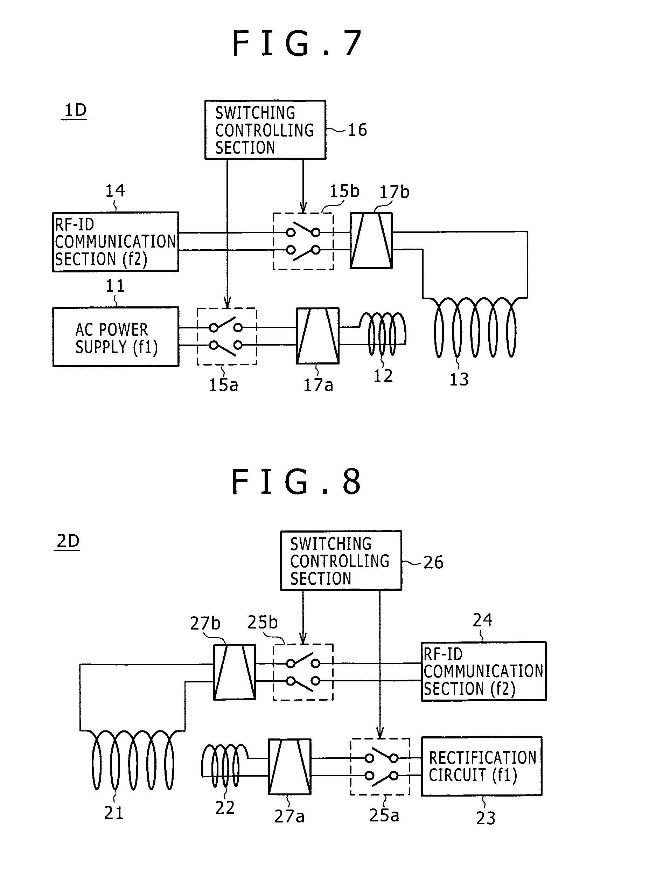

FIG. 7 shows an example of a configuration of a power supply source in a contactless power supplying communication system of the fourth embodiment. In FIG. 7, the power supply source shown include several common components to those of the power supply sources 1 and 1A shown in FIGS. 1 and 2, and overlapping description of the common components is omitted herein to avoid redundancy.

Meanwhile, FIG. 8 shows an example of a configuration of a power supply destination in the contactless power supplying communication system of the fourth embodiment. In FIG. 8, the power supply destination shown includes several common components to those of the power supply destinations 2 and 2A shown in FIGS. 1 and 2, and overlapping description of the common components is omitted herein to avoid redundancy.

Referring first to FIG. 7, in the power supply source 1D of the contactless power supplying communication system in the fourth embodiment, a switching circuit 15a and a filter circuit 17a are provided between an AC power supply 11 and an excitation element 12. Similarly, in the power supply source 1D, another switching circuit 15b and another filter circuit 17b are provided between an RF-ID communication section 14 and a resonance element 13.

In the power supply source 1D, the switching circuits 15a and 15b are controlled by a switching controlling section 16 similarly as in the case of the power supply source 1 in the first embodiment described hereinabove. Further, the filter circuits 17a and 17b are configured basically similarly to the filter circuits 17a and 17b of the power supply source 1A in the second embodiment described above.

However, in the power supply source 1D in the fourth embodiment, the impedance of the excitation element 12 is suitably controlled by the switching circuit 15a and the impedance of the resonance element 13 is suitably controlled by the switching circuit 15b.

Therefore, in the filter circuits 17a and 17b, the impedance of the excitation element 12 and the resonance element 13 may not be controlled as in the case of the power supply source 1A in the second embodiment described above. Accordingly, in the power supply source 1D in the fourth embodiment, an inconvenience such as mixture of noise upon communication or power supply can be prevented so that communication and power supplying are carried out in high quality.

### [Example of the Configuration of the Power Supply Destination in the Fourth Embodiment]

Referring now to FIG. 8, in the power supply destination 2D of the contactless power supplying communication system of the fourth embodiment, a switching circuit 25a and a filter circuit 27a are provided between an excitation element 22 and a rectification circuit 23. Similarly, in the power supply destination 2D, a switching circuit 25b and a filter circuit 27b are provided between a resonance element 21 and a RF-ID communication section 24.

In the power supply destination 2D, the switching circuits 25a and 25b are controlled by the switching controlling section 26 similarly as in the power supply destination 2 in the first embodiment described above. Further, the filter circuits 27a and 27b are configured basically similarly to the filter circuits 27a and 27b of the power supply destination 2A in the second embodiment described above.

However, in the power supply destination 2D in the fourth embodiment, the impedance of the excitation element 22 is suitably controlled by the switching circuit 25a and the impedance of the resonance element 21 is suitably controlled by the switching circuit 25b.

Therefore, in the filter circuits 27a and 27b, different from those of the power supply destination 2A in the second embodiment described above, the impedance of the excitation element 22 and the resonance element 21 may not be controlled. Accordingly, in the power supply destination 2D in the fourth embodiment, an inconvenience such as mixture of noise upon communication or power supply can be prevented so that communication and power supplying are carried out in high quality.

It is to be noted that, as a modification to the fourth embodiment, for example, in the case of the power supply source 1D shown in FIG. 7, where the switching circuit 15a and the filter circuit 17a are provided between the AC power supply 11 and the excitation element 12, only one of the switching circuit 15b and the filter circuit 17b may be provided between the RF-ID communication section 14 and the resonance element 13.

Or conversely, in the power supply source 1D, where the switching circuit 15b and the filter circuit 17b are provided between the RF-ID communication section 14 and the resonance element 13, only one of the switching circuit 15a and the filter circuit 17a may be provided between the AC power supply 11 and the excitation element 12.

Further, as another modification to the fourth embodiment, for example, in the case of the power supply destination 2D shown in FIG. 8, where the switching circuit 25a and the filter circuit 27a are provided between the excitation element 22 and the rectification circuit 23, only one of the switching circuit 25b and the filter circuit 27b may be provided between the resonance element 21 and the RF-ID communication section 24.

Or conversely, in the power supply destination 2D, where the switching circuit 25b and the filter circuit 27b are provided between the resonance element 21 and the RF-ID communication section 24, only one of the switching circuit 25a and the filter circuit 27a may be provided between the excitation element 22 and the rectification circuit 23.

### [Application of the Invention to a Method]

The adjustment method of the impedance in the power supply system and the communication system carried out in the power supply source described hereinabove with reference to FIG. 1, 4 or 7 is an adjustment method of the impedance in the contactless power supplying communication apparatus according to an embodiment of the present invention.

Further, the adjustment method of the impedance in the power reception system and the communication system carried out in the power supply destination described hereinabove with reference to FIG. 1, 2, 5, 6 or 8 is an adjustment method of the impedance in the contactless power reception communication apparatus according to an embodiment of the present invention.

### Others

As recognized from the description of the first to fourth embodiments described above, in order to adjust the impedance of the resonance element and the excitation element to an appropriate value, it is possible to use a switching circuit, use a filter circuit or use both of the circuits in combination.

It is to be noted that, in the embodiments described above, the resonance element in the contactless power supplying communication apparatus is implemented by the resonance element 13 and the excitation element is implemented by the excitation element 12. Further, the AC power supply section is implemented by the AC power supply 11 and the communication section is implemented by the RF-ID communication section 14. Further, the first adjustment section is implemented by the switching circuit 15a and the filter circuit 17a and the second adjustment section is implemented by the switching circuit 15b and the filter circuit 17b.

Further, in the embodiments described above, the resonance element in the contactless power receiving communication apparatus is implemented by the resonance element 21 and the excitation element is implemented by the excitation element 22. Further, the rectification circuit is implemented by the rectification circuit 23 and the communication section is implemented by the RF-ID communication section 24. Further, the first adjustment section is implemented by the switching circuit 25a and the filter circuit 27a and the second adjustment section is implemented by the switching circuit 25b and the filter

### circuit 27b.

It is to be noted that, in the embodiments described above, the communication side adjustment section in the contactless power supplying communication apparatus is implemented by the switching circuit 15b and the filter circuit 17b and the power supplying side adjustment section is implemented by the switching circuit 15a and the filter circuit 17a.

Further, in the embodiments described above, the communication side adjustment section in the contactless power reception communication apparatus is implemented by the switching circuit 25b and the filer circuit 27b and the power supplying side adjustment section is implemented by the switching circuit 25a and the filter circuit 27a.

It is to be noted that, in the embodiments described hereinabove, the power supply destination has been described as a portable telephone terminal. However, the configuration of the power supply destination is not limited to this. For example, various electronic apparatus which require charging and have a short-range radio communication function can be made a power supply destination such as a portable music player, a portable game machine, a digital still camera, a digital video camera and an electronic notebook.

Further, while, in the embodiments described hereinabove, power is supplied in a contactless fashion by a magnetic field resonance method, the present invention can be applied similarly also where power is supplied in a contactless fashion using not only the magnetic field resonance method but also an electric field resonance method and an electromagnetic induction method.

In particular, while, in the case of the magnetic field resonance method, the energy generated by a resonance element is a magnetic field, the energy generated by a resonance element by the electric field resonance method is the intensity of an electric field.

Further, in the embodiments described hereinabove, the power supply source includes an excitation element between an AC power supply and a resonance element, and the power supply destinations include an excitation element between a resonance element and a rectification circuit. However, the configuration of the power supply source and the power supply destinations is not limited to this. Only if it is possible to deal with the problems of reflection of power and the impedance, then they can be configured without using an excitation element.

The present application contains subject matter related to that disclosed in Japanese Priority Patent Application JP 2009-171799 filed in the Japan Patent Office on July 23, 2009, the entire content of which is hereby incorporated by reference.

It should be understood by those skilled in the art that various modifications, combinations, sub-combinations and alterations may occur depending on design requirements and other factor in so far as they are within the scope of the appended claims or the equivalents thereof.

### FURTHER EMBODIMENTS ARE:

1. A contactless power supplying communication apparatus, comprising:
   a resonance element adapted to supply alternating current power to one or more electronic apparatus by resonance;
   an alternating current power supply section adapted to generate alternating current power of a frequency in accordance with a resonance frequency of said resonance element and supply the generated alternating current power to said resonance element;
   a communication section adapted to carry out a communication process through said resonance element; and
   switching means provided between said resonance element and said communication section and adapted to cut off connection between said resonance element and said communication section upon power supply but establish connection between said resonance element and said communication section upon communication.
2. The contactless power supplying communication apparatus according to item 1, further comprising
   an excitation element provided between said alternating current power supply circuit and said resonance element and adapted to receive supply of the alternating current power from said alternating current power supply circuit and supply the alternating current power to said resonance element through electromagnetic induction.
3. A contactless power supplying communication apparatus, comprising:
   a resonance element adapted to supply alternating current power to one or more electronic apparatus by resonance;
   an alternating current power supply section adapted to generate alternating current power of a frequency in accordance with a resonance frequency of said resonance element and supply the generated alternating current power to said resonance element;
   a communication section adapted to carry out a communication process through said resonance element; and
   switching means provided between said resonance element and said alternating current power supply section and adapted to establish connection between said resonance element and said alternating current power supply section upon power supply but cut off connection between said resonance element and said alternating current power supply section upon communication.
4. The contactless power supplying communication apparatus according to item 3, further comprising
   an excitation element provided between said alternating current power supply circuit and said resonance element and adapted to receive supply of the alternating current power from said alternating current power supply circuit and supply the alternating current power to said resonance element through electromagnetic induction.
5. A contactless power supplying communication apparatus, comprising:
   a resonance element adapted to supply alternating current power to one or more electronic apparatus by resonance;
   an alternating current power supply section adapted to generate alternating current power of a frequency in accordance with a resonance frequency of said resonance element and supply the generated alternating current power to said resonance element;
   a communication section adapted to carry out a communication process through said resonance element; and
   filter means provided between said resonance element and said communication section and having a frequency band which allows a signal of a frequency band to pass through said filter means, said filter means being adapted to keep the impedance of said resonance element to a predetermined value.
6. The contactless power supplying communication apparatus according to item 5, further comprising
   an excitation element provided between said alternating current power supply circuit and said resonance element and adapted to receive supply of the alternating current power from said alternating current power supply circuit and supply the alternating current power to said resonance element through electromagnetic induction.
7. A contactless power supplying communication apparatus, comprising:
   a resonance element adapted to supply alternating current power to one or more electronic apparatus by resonance;
   an alternating current power supply section adapted to generate alternating current power of a frequency in accordance with a resonance frequency of said resonance element and supply the generated alternating current power to said resonance element;
   a communication section adapted to carry out a communication process through said resonance element; and
   filter means provided between said resonance element and said alternating current power supply section and having a frequency band which allows the alternating current power to pass through said filter means, said filter means being adapted to keep the impedance of said resonance element to a predetermined value.
8. The contactless power supplying communication apparatus according to item 7, further comprising
   an excitation element provided between said alternating current power supply circuit and said resonance element and adapted to receive supply of the alternating current power from said alternating current power supply circuit and supply the alternating current power to said resonance element through electromagnetic induction.
9. A contactless power receiving communication apparatus, comprising:
   a resonance element adapted to receive supply of alternating current power from a resonance element of a power supply source contactlessly through resonance;
   a rectification circuit adapted to form direct current power from the alternating current power from said resonance element and output the direct current power;
   a communication section adapted to carry out a communication process through said resonance element which receives the supply of the alternating current power; and
   switching means provided between said resonance element and said communication section and adapted to cut off connection between said resonance element and said communication section upon power reception but establish connection between said resonance element and said communication section upon communication.
10. The contactless power receiving communication apparatus according to item 9, further comprising
   an excitation element provided between said resonance element and said rectification circuit and adapted to receive supply of the alternating current power from said resonance element through electromagnetic induction and supply the alternating current power to said rectification circuit.
11. A contactless power receiving communication apparatus, comprising:
   a resonance element adapted to receive supply of alternating current power from a resonance element of a power supply source contactlessly through resonance;
   a rectification circuit adapted to form direct current power from the alternating current power from said resonance element and output the direct current power;
   a communication section adapted to carry out a communication process through said resonance element which receives the supply of the alternating current power; and
   switching means provided between said resonance element and said rectification circuit and adapted to establish connection between said resonance element and said rectification circuit upon power reception but cut off connection between said resonance element and said rectification circuit upon communication.
12. The contactless power receiving communication apparatus according to item 11, further comprising
   an excitation element provided between said resonance element and said rectification circuit and adapted to receive supply of the alternating current power from said resonance element through electromagnetic induction and supply the alternating current power to said rectification circuit.
13. A contactless power receiving communication apparatus, comprising:
   a resonance element adapted to receive supply of alternating current power from a resonance element of a power supply source contactlessly through resonance;
   a rectification circuit adapted to form direct current power from the alternating current power from said resonance element and output the direct current power;
   a communication section adapted to carry out a communication process through said resonance element which receives the supply of the alternating current power; and
   filter means provided between said resonance element and said communication section and having a frequency band which allows a signal of a frequency band to pass through said filter means, said filter means being adapted to keep the impedance of said resonance element to a predetermined value.
14. The contactless power receiving communication apparatus according to item 13, further comprising
   an excitation element provided between said resonance element and said rectification circuit and adapted to receive supply of the alternating current power from said resonance element through electromagnetic induction and supply the alternating current power to said rectification circuit.
15. A contactless power receiving communication apparatus, comprising:
   a resonance element adapted to receive supply of alternating current power from a resonance element of a power supply source contactlessly through resonance;
   a rectification circuit adapted to form direct current power from the alternating current power from said resonance element and output the direct current power;
   a communication section adapted to carry out a communication process through said resonance element which receives the supply of the alternating current power; and
   filter means provided between said resonance element and said rectification circuit and having a frequency band which allows the alternating current power to pass through said filter means, said filter means being adapted to keep the impedance of said resonance element to a predetermined value.
16. The contactless power receiving communication apparatus according to item 15, further comprising
   an excitation element provided between said resonance element and said rectification circuit and adapted to receive supply of the alternating current power from said resonance element through electromagnetic induction and supply the alternating current power to said rectification circuit.
17. A power supplying communication controlling method for a contactless power supplying communication apparatus which includes a resonance element for supplying alternating current power to one or more electronic apparatus by resonance, a communication section configured to carry out a communication process through the resonance element, an alternating current power supply section configured to generate alternating current power of a frequency in accordance with a resonance frequency of the resonance element and supply the generated alternating current power to the resonance element, and a switch circuit provided between the resonance element and the communication section and/or between the resonance element and the alternating current power supply section, comprising a step executed by control means of
   controlling the switch circuit upon power supply such that, where the switch circuit is provided between the resonance element and the communication section, the switch circuit is switched so as to cut connection between the resonance element and the communication section but, where the switch circuit is provided between the resonance element and the alternating current power supply section, the switch circuit is switched so as to establish connection between the resonance element and the alternating current power supply section but controlling the switch circuit upon communication such that, where the switch circuit is provided between the resonance element and the communication section, the switch circuit is switched so as to establish connection between the resonance element and the communication section but, where the switch circuit is provided between the resonance element and the alternating current power supply section, the switch circuit is switched so as to cut connection between the resonance element and the alternating current power supply section.
18. A power supplying communication controlling method for a contactless power supplying communication apparatus which includes a resonance element for supplying alternating current power to one or more electronic apparatus by resonance, a communication section configured to carry out a communication process through the resonance element, an alternating current power supply section configured to generate alternating current power of a frequency in accordance with a resonance frequency of the resonance element and supply the generated alternating current power to the resonance element, and a filter circuit provided between the resonance element and the communication section and/or between the resonance element and the alternating current power supply section, comprising a step of
   applying filtering using the filter circuit configured such that, where the filter circuit is provided between the resonance element and the communication section, the filter circuit has a frequency band which allows a signal of a communication band to pass through the filter circuit and keeps the impedance of the resonance element to a predetermined value, but where the filter circuit is provided between the resonance element and the alternating current power supply section, the filter circuit has a frequency band which allows the alternating current power to pass therethrough and keeps the impedance of the resonance element to the predetermined value.
19. A power receiving communication controlling method for a contactless power receiving communication apparatus which includes a resonance element for receiving supply of alternating current power from a resonance element of a power supply source contactlessly through resonance, a communication section configured to carry out a communication process through the resonance element, a rectification circuit for forming direct current power from the alternating current power from the resonance element and output the direct current power, and a switch circuit provided between the resonance element and the communication section and/or between the resonance element and the rectification circuit, comprising a step executed by control means of
   controlling the switch circuit upon power supply such that, where the switch circuit is provided between the resonance element and the communication section, the switch circuit is switched so as to cut connection between the resonance element and the communication section but, where the switch circuit is provided between the resonance element and the rectification circuit, the switch circuit is switched so as to establish connection between the resonance element and the rectification circuit but controlling the switch circuit upon communication such that, where the switch circuit is provided between the resonance element and the communication section, the switch circuit is switched so as to establish connection between the resonance element and the communication section but, where the switch circuit is provided between the resonance element and the rectification circuit, the switch circuit is switched so as to cut connection between the resonance element and the rectification circuit.
20. A power receiving communication controlling method for a contactless power receiving communication apparatus which includes a resonance element for receiving supply of alternating current power from a resonance element of a power supply source contactlessly through resonance, a communication section configured to carry out a communication process through the resonance element, a rectification circuit for forming direct current power from the alternating current power from the resonance element and output the direct current power, and a filter circuit provided between the resonance element and the communication section and/or between the resonance element and the rectification circuit, comprising a step of
   applying filtering using the filter circuit configured such that, where the filter circuit is provided between the resonance element and the communication section, the filter circuit has a frequency band which allows a signal of a communication band to pass through the filter circuit and keeps the impedance of the resonance element to a predetermined value, but where the filter circuit is provided between the resonance element and the rectification circuit, the filter circuit has a frequency band which allows the alternating current power to pass therethrough and keeps the impedance of the resonance element to the predetermined value.

## Claims

1. A contactless power supplying communication apparatus, comprising:
a resonance element adapted to supply alternating current power to one or more electronic apparatus by resonance;
an alternating current power supply section adapted to generate alternating current power of a frequency in accordance with a resonance frequency of said resonance element and supply the generated alternating current power to said resonance element;
a communication section adapted to carry out a communication process through said resonance element; and
switching means provided between said resonance element and said communication section and adapted to cut off connection between said resonance element and said communication section upon power supply but establish connection between said resonance element and said communication section upon communication.

2. A contactless power supplying communication apparatus, comprising:
a resonance element adapted to supply alternating current power to one or more electronic apparatus by resonance;
an alternating current power supply section adapted to generate alternating current power of a frequency in accordance with a resonance frequency of said resonance element and supply the generated alternating current power to said resonance element;
a communication section adapted to carry out a communication process through said resonance element; and
switching means provided between said resonance element and said alternating current power supply section and adapted to establish connection between said resonance element and said alternating current power supply section upon power supply but cut off connection between said resonance element and said alternating current power supply section upon communication.

3. A contactless power supplying communication apparatus, comprising:
a resonance element adapted to supply alternating current power to one or more electronic apparatus by resonance;
an alternating current power supply section adapted to generate alternating current power of a frequency in accordance with a resonance frequency of said resonance element and supply the generated alternating current power to said resonance element;
a communication section adapted to carry out a communication process through said resonance element; and
filter means provided between said resonance element and said communication section and having a frequency band which allows a signal of a frequency band to pass through said filter means, said filter means being adapted to keep the impedance of said resonance element to a predetermined value.

4. A contactless power supplying communication apparatus, comprising:
a resonance element adapted to supply alternating current power to one or more electronic apparatus by resonance;
an alternating current power supply section adapted to generate alternating current power of a frequency in accordance with a resonance frequency of said resonance element and supply the generated alternating current power to said resonance element;
a communication section adapted to carry out a communication process through said resonance element; and
filter means provided between said resonance element and said alternating current power supply section and having a frequency band which allows the alternating current power to pass through said filter means, said filter means being adapted to keep the impedance of said resonance element to a predetermined value.

5. The contactless power supplying communication apparatus according to anyone of claims 1 to 4, further comprising
an excitation element provided between said alternating current power supply circuit and said resonance element and adapted to receive supply of the alternating current power from said alternating current power supply circuit and supply the alternating current power to said resonance element through electromagnetic induction.

6. A contactless power receiving communication apparatus, comprising:
a resonance element adapted to receive supply of alternating current power from a resonance element of a power supply source contactlessly through resonance;
a rectification circuit adapted to form direct current power from the alternating current power from said resonance element and output the direct current power;
a communication section adapted to carry out a communication process through said resonance element which receives the supply of the alternating current power; and
switching means provided between said resonance element and said communication section and adapted to cut off connection between said resonance element and said communication section upon power reception but establish connection between said resonance element and said communication section upon communication.

7. A contactless power receiving communication apparatus, comprising:
a resonance element adapted to receive supply of alternating current power from a resonance element of a power supply source contactlessly through resonance;
a rectification circuit adapted to form direct current power from the alternating current power from said resonance element and output the direct current power;
a communication section adapted to carry out a communication process through said resonance element which receives the supply of the alternating current power; and
switching means provided between said resonance element and said rectification circuit and adapted to establish connection between said resonance element and said rectification circuit upon power reception but cut off connection between said resonance element and said rectification circuit upon communication.

8. A contactless power receiving communication apparatus, comprising:
a resonance element adapted to receive supply of alternating current power from a resonance element of a power supply source contactlessly through resonance;
a rectification circuit adapted to form direct current power from the alternating current power from said resonance element and output the direct current power;
a communication section adapted to carry out a communication process through said resonance element which receives the supply of the alternating current power; and
filter means provided between said resonance element and said communication section and having a frequency band which allows a signal of a frequency band to pass through said filter means, said filter means being adapted to keep the impedance of said resonance element to a predetermined value.

9. A contactless power receiving communication apparatus, comprising:
a resonance element adapted to receive supply of alternating current power from a resonance element of a power supply source contactlessly through resonance;
a rectification circuit adapted to form direct current power from the alternating current power from said resonance element and output the direct current power;
a communication section adapted to carry out a communication process through said resonance element which receives the supply of the alternating current power; and
filter means provided between said resonance element and said rectification circuit and having a frequency band which allows the alternating current power to pass through said filter means, said filter means being adapted to keep the impedance of said resonance element to a predetermined value.

10. The contactless power receiving communication apparatus according to anyone of claims 6 to 9, further comprising
an excitation element provided between said resonance element and said rectification circuit and adapted to receive supply of the alternating current power from said resonance element through electromagnetic induction and supply the alternating current power to said rectification circuit.

11. A power supplying communication controlling method for a contactless power supplying communication apparatus which includes a resonance element for supplying alternating current power to one or more electronic apparatus by resonance, a communication section configured to carry out a communication process through the resonance element, an alternating current power supply section configured to generate alternating current power of a frequency in accordance with a resonance frequency of the resonance element and supply the generated alternating current power to the resonance element, and a switch circuit provided between the resonance element and the communication section and/or between the resonance element and the alternating current power supply section, comprising a step executed by control means of
controlling the switch circuit upon power supply such that, where the switch circuit is provided between the resonance element and the communication section, the switch circuit is switched so as to cut connection between the resonance element and the communication section but, where the switch circuit is provided between the resonance element and the alternating current power supply section, the switch circuit is switched so as to establish connection between the resonance element and the alternating current power supply section but controlling the switch circuit upon communication such that, where the switch circuit is provided between the resonance element and the communication section, the switch circuit is switched so as to establish connection between the resonance element and the communication section but, where the switch circuit is provided between the resonance element and the alternating current power supply section, the switch circuit is switched so as to cut connection between the resonance element and the alternating current power supply section.

12. A power supplying communication controlling method for a contactless power supplying communication apparatus which includes a resonance element for supplying alternating current power to one or more electronic apparatus by resonance, a communication section configured to carry out a communication process through the resonance element, an alternating current power supply section configured to generate alternating current power of a frequency in accordance with a resonance frequency of the resonance element and supply the generated alternating current power to the resonance element, and a filter circuit provided between the resonance element and the communication section and/or between the resonance element and the alternating current power supply section, comprising a step of
applying filtering using the filter circuit configured such that, where the filter circuit is provided between the resonance element and the communication section, the filter circuit has a frequency band which allows a signal of a communication band to pass through the filter circuit and keeps the impedance of the resonance element to a predetermined value, but where the filter circuit is provided between the resonance element and the alternating current power supply section, the filter circuit has a frequency band which allows the alternating current power to pass therethrough and keeps the impedance of the resonance element to the predetermined value.

13. A power receiving communication controlling method for a contactless power receiving communication apparatus which includes a resonance element for receiving supply of alternating current power from a resonance element of a power supply source contactlessly through resonance, a communication section configured to carry out a communication process through the resonance element, a rectification circuit for forming direct current power from the alternating current power from the resonance element and output the direct current power, and a switch circuit provided between the resonance element and the communication section and/or between the resonance element and the rectification circuit, comprising a step executed by control means of
controlling the switch circuit upon power supply such that, where the switch circuit is provided between the resonance element and the communication section, the switch circuit is switched so as to cut connection between the resonance element and the communication section but, where the switch circuit is provided between the resonance element and the rectification circuit, the switch circuit is switched so as to establish connection between the resonance element and the rectification circuit but controlling the switch circuit upon communication such that, where the switch circuit is provided between the resonance element and the communication section, the switch circuit is switched so as to establish connection between the resonance element and the communication section but, where the switch circuit is provided between the resonance element and the rectification circuit, the switch circuit is switched so as to cut connection between the resonance element and the rectification circuit.

14. A power receiving communication controlling method for a contactless power receiving communication apparatus which includes a resonance element for receiving supply of alternating current power from a resonance element of a power supply source contactlessly through resonance, a communication section configured to carry out a communication process through the resonance element, a rectification circuit for forming direct current power from the alternating current power from the resonance element and output the direct current power, and a filter circuit provided between the resonance element and the communication section and/or between the resonance element and the rectification circuit, comprising a step of
applying filtering using the filter circuit configured such that, where the filter circuit is provided between the resonance element and the communication section, the filter circuit has a frequency band which allows a signal of a communication band to pass through the filter circuit and keeps the impedance of the resonance element to a predetermined value, but where the filter circuit is provided between the resonance element and the rectification circuit, the filter circuit has a frequency band which allows the alternating current power to pass therethrough and keeps the impedance of the resonance element to the predetermined value.
